(19) Europäisches Patentamt
European Patent Office
Office européen des brevets

(11) **EP 2 672 277 B1**

(12) **FASCICULE DE BREVET EUROPEEN**

(45) Date de publication et mention de la délivrance du brevet:
**26.11.2014 Bulletin 2014/48**

(51) Int Cl.:
***G01P 5/00*** *(2006.01)*     ***G01P 21/02*** *(2006.01)*

(21) Numéro de dépôt: **13002729.5**

(22) Date de dépôt: **27.05.2013**

(54) **Procédé et dispositif de détermination de vitesses air d'un giravion en vol stationnaire et/ou à basses vitesses**

Verfahren und Vorrichtung zur Bestimmung der Luftgeschwindigkeit eines Drehflügelflugzeugs im stationären Flug und/oder Flug bei niedrigen Geschwindigkeiten

Method and device for determining air speed of a rotorcraft while hovering and/or flying at low speeds

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **05.06.2012 FR 1201609**

(43) Date de publication de la demande:
**11.12.2013 Bulletin 2013/50**

(73) Titulaire: **Airbus Helicopters**
**13725 Marignane Cedex (FR)**

(72) Inventeurs:
• **Gardes, Jérôme**
**13100 Aix en Provence (FR)**
• **Pinacho, Jean-Paul**
**F-13940 Molleges (FR)**

• **Gaulene, Philippe**
**F-13700 Marignane (FR)**

(74) Mandataire: **GPI & Associés**
**EuroParc de Pichaury**
**Bâtiment B2 - 1er Etage**
**1330, rue Guillibert de la Lauzière**
**13856 Aix-en-Provence Cedex 3 (FR)**

(56) Documents cités:
**EP-A1- 0 402 224     FR-A1- 2 613 078**

• **YEW CHAI PAW ET AL: "Development and application of an integrated framework for small UAV flight control development", MECHATRONICS, vol. 21, no. 5, août 2011 (2011-08), pages 789-802, XP028226794, ISSN: 0957-4158, DOI: 10.1016/J.MECHATRONICS. 2010.09.009 [extrait le 2010-10-01]**

**Description**

La présente invention est du domaine des aéronefs et relève des modalités de mesure de la vitesse d'un aéronef par rapport à un fluide environnant. La présente invention porte plus spécifiquement sur les modalités de détermination de la vitesse air d'un giravion évoluant en vol stationnaire et/ou à basses vitesses.

La présente invention a pour objet une méthode de détermination des vitesses air courantes d'un giravion évoluant en vol stationnaire et/ou à basses vitesses. Les vitesses air déterminées correspondent notamment respectivement à une vitesse air latérale $LAS_{Vy}$ et à une vitesse air longitudinale $LAS_{Vx}$ du giravion. Il est à considérer les notions de stationnaire et de basses vitesses comme analogues au regard d'un état de vol du giravion évoluant à une vitesse inférieure ou égale à un seuil de vitesse de progression du giravion communément admis. A titre indicatif mais non restrictif, un tel seuil de vitesse correspond à une vitesse de progression du giravion inférieure à 40 noeuds (Kt) par exemple.

Les giravions sont des aéronefs qui présentent la particularité de pouvoir évoluer en vol stationnaire et/ou à basses vitesses. Les giravions comportent au moins un rotor principal procurant leur sustentation voire aussi leur propulsion, et au moins un dispositif anti-couple, rotor anti-couple par exemple, permettant de contrôler les mouvements du giravion en lacet. Ces rotors comportent une voilure tournante comprenant des pales. Pour modifier les modalités de progression du giravion, un pilote provoque une variation au moins collective sinon aussi cyclique du pas des pales. Le rotor anti-couple est par exemple formé d'un rotor de queue du giravion, ou d'au moins une hélice propulsive dans le cas d'un hélicoptère hybride. Le pilote est susceptible d'être un opérateur qui entraîne des organes de commande manuelle, et/ou d'être un dispositif d'assistance au pilotage, pilote automatique notamment.

Pour assister le pilote, les giravions sont équipés d'une instrumentation de bord fournissant diverses informations sur les modalités de progression et/ou sur l'environnement extérieur du giravion.

Dans le domaine de l'aéronautique, l'instrumentation de bord comprend couramment des instruments de mesure pour déterminer les vitesses air courantes d'un aéronef, à savoir la vitesse air longitudinale $LAS_{Vx}$ et la vitesse air latérale $LAS_{Vy}$. Les notions de longitudinale et de latérale sont des notions communément admises considérées dans le plan d'orientation générale de l'aéronef. Les instruments de mesure des vitesses air sont notamment constitués de sondes anémométriques placées à l'extérieur de l'aéronef, qui fournissent des informations de pression statique et de pression dynamique à partir desquelles est déterminée une vitesse air de l'aéronef.

Un problème posé pour les giravions réside dans le manque de fiabilité et de pertinence des informations fournies par les sondes anémométriques à basses vitesses de progression du giravion. En outre, l'implantation des sondes à l'extérieur du giravion affecte son aérodynamisme, ce qui est à éviter. De plus, les informations fournies par les sondes sont dépendantes d'une part de leur orientation sur le giravion ce qui rend délicat leur positionnement, et d'autre part de leur orientation d'implantation sur le giravion.

Il est cependant utile, voire nécessaire, de fournir au pilote du giravion en situation de vol stationnaire et/ou de basses vitesses, des informations relatives aux vitesses air et à la direction du giravion au regard de son assiette par rapport à l'écoulement de l'air environnant. De telles informations sont notamment utiles pour indiquer l'intensité et/ou la direction du vent, voire encore pour alerter de dangers en vol susceptibles d'être induits par une composante de vent arrière.

Pour résoudre ce problème, il a été proposé des systèmes de calcul VIMI (Vitesse Indiquée par Moyens Internes) ou AVC (Anémométrie Vectorielle Calculée), qui permettent de déterminer les vitesses air d'un giravion à partir de formulations théoriques simplifiées de la mécanique de vol.

De telles formulations théoriques prennent notamment en compte diverses informations fournies par l'instrumentation de bord, telles que des instruments d'évaluation des positions de commandes de vol et/ou d'évaluation des accélérations du giravion. Il est par exemple encore exploité par le système de calcul des informations fournies par des sondes montées sur l'axe de rotation du rotor principal ou montées en bout des pales d'un tel rotor.

Par exemple selon le document FR2885222 (THALES SA), une loi d'estimation des vitesses air d'un giravion est définie selon une combinaison de diverses informations de mesure fournies par l'instrumentation de bord. De telles informations sont relatives à une mesure de la pression de l'air extérieur au giravion, à la position de la chaîne cinématique exploitée pour faire varier le pas des pales du rotor principal afin d'évaluer l'assiette du giravion, et à une accélération de l'appareil mesurée à partir d'une centrale de mesure inertielle embarquée.

Par exemple encore selon le document FR2613078 (CROUZET), un couple de loi de calcul permet de calculer les vitesses air courantes d'un giravion en exploitant des valeurs de vitesses air mesurées en vol à bord d'un giravion d'essai en prenant en compte divers critères de calcul relatifs au pas des pales des rotors du giravion, à l'accélération du giravion et aux inclinaisons du giravion en tangage et en roulis.

Par exemple encore selon le document EP0402224 (SEXTANT AVIONIQUE), une opération d'étalonnage est effectuée en vol à bord d'un giravion d'essai pour estimer les vitesses air d'un giravion selon divers critères. Puis des lois de calcul de telles vitesses air d'un quelconque giravion analogue au giravion d'essai sont construites en fonction des résultats issus de l'opération d'étalonnage.

Les systèmes de calcul VIMI nécessitent une calibration des dites formulations théoriques simplifiées, qui est une légère adaptation de ces formulations théoriques simplifiées. Une telle calibration est effectuée pour chacun des giravions sur lesquels ils sont embarqués, afin de procurer une précision et une fiabilité satisfaisantes des vitesses air déterminées. La loi d'estimation des vitesses air intégrée au système de calcul, est calibrée par essai en vol du giravion. Plus particulièrement, la pertinence et la fiabilité de l'application de la loi d'estimation sont dépendantes des caractéristiques structurelles propres aux instruments du giravion qui sont utilisés pour appliquer la loi d'estimation.

En conséquence, les paramètres de la loi d'estimation doivent être calibrés à partir de vols d'essai réalisés pour chacun des giravions sur lesquels est spécifiquement embarqué le système de calcul, pour prendre en compte ladite dépendance. De telles opérations de calibration sont contraignantes, longues et coûteuses.

La présente invention vise à proposer un procédé de détermination de vitesses air courantes d'un giravion évoluant en vol stationnaire et/ou à basses vitesses, exploitant un système de calcul embarqué à bord du giravion. Les vitesses air courantes à déterminer sont notamment respectivement une vitesse air longitudinale $LAS_{Vx}$ et une vitesse air latérale $LAS_{Vy}$.

Un tel système de calcul comprend notamment un calculateur d'exécution d'une règle de calcul à partir de laquelle sont déterminées les vitesses air courantes du giravion. Le calculateur d'exécution est en relation avec des instruments de mesure embarqués à bord du giravion qui fournissent des informations d'entrée pour l'exécution de la règle de calcul.

La présente invention a pour objet un procédé d'élaboration et d'exécution d'une dite règle de calcul, un dispositif de mise en oeuvre de ce procédé ainsi qu'un système de calcul et sa méthode de mise en oeuvre. Un tel système de calcul intègre un calculateur d'exécution doté de la règle de calcul préalablement élaborée à partir de la mise en oeuvre du dit procédé.

A l'encontre des habitudes dans le domaine, il est plus particulièrement recherché par la présente invention d'éviter une calibration de la règle de calcul, c'est-à-dire un ajustement des coefficients de la règle de calcul, pour chacun des giravions d'une famille donnée sur lequel est spécifiquement embarqué le système de calcul, une telle calibration étant traditionnellement réalisée par vols d'essai spécifiquement réalisés à bord de ce chacun de ces giravions.

Il est à considérer la distinction entre une famille de giravions, regroupant plusieurs giravions d'un même type présentant une structure générale similaire et des comportements et performances similaires, et un giravion d'essai ou un giravion spécifique que comprend une telle famille de giravions et sur lesquels sont embarqués des dits systèmes de calcul qui leurs sont propres.

Le procédé de la présente invention est un procédé de calcul puis d'affichage de vitesses air courantes d'un giravion spécifique évoluant en situation de vol stationnaire et/ou à basses vitesses. Les vitesses air courantes sont plus spécifiquement respectivement une vitesse air courante longitudinale $LAS_{Vx}$ et une vitesse air courante latérale $LAS_{Vy}$.

Le procédé comprend une opération d'élaboration d'une règle de calcul desdites vitesses air courantes, comprenant une opération de vols d'essai à bord d'un giravion et une opération d'intégration de ladite règle de calcul dans un calculateur d'exécution embarqué. Le calculateur d'exécution intégrant la règle de calcul est placé en relation avec des instruments de mesure équipant le giravion spécifique.

Une opération d'exécution en vol à bord du giravion spécifique de la règle de calcul, permet de déterminer lesdites vitesses air courantes à partir d'informations de mesure fournies par les instruments de mesure du giravion spécifique. Les vitesses air courantes étant calculées à partir de l'exécution de la règle de calcul, il est ensuite effectué une opération d'affichage desdites vitesses air courantes par des moyens d'affichage équipant le giravion spécifique et placés en communication avec le calculateur d'exécution.

La règle de calcul est notamment élaborée par des moyens de construction comprenant un calculateur, et à partir de paramètres de calcul préalablement saisis et stockés par un opérateur dans des moyens de mémoire de construction.

La règle de calcul élaborée est plus spécifiquement intégrée par un opérateur dans des moyens de mémoire associés au calculateur d'exécution installé à bord du giravion spécifique en étant mis en relation avec les instruments de bord dont un giravion est traditionnellement équipé pour d'autres fonctions, notamment pour son pilotage. Le calculateur est aussi placé en communication avec les moyens d'affichage. L'opération d'élaboration de la règle de calcul comprend une opération de vols d'essai à bord d'un giravion, sans qu'il soit précisé à ce stade de la description de la présente invention la typologie de ce giravion ni la nature des opérations effectuées au cours de ces vols d'essai.

Selon la présente invention, un tel procédé est principalement reconnaissable en ce qu'il comprend les opérations successives suivantes :

a) ladite opération d'élaboration de la règle de calcul, comprenant plus particulièrement les opérations spécifiques suivantes :

-) élaboration, au moyen d'un calculateur de construction, d'un couple de premières lois polynomiales de calcul de vitesses air estimées. Les vitesses air estimées sont respectivement une vitesse air estimée longitudinale $V_x$ et vitesse air estimée latérale $V_y$ d'un giravion modélisé d'une famille dont relève le giravion spécifique. Les premières lois polynomiales sont construites par régression multilinéaire par le calculateur de construction, notamment à partir d'informations calculées et d'informations saisies par un opérateur au bureau d'étude.

Plus particulièrement, les premières lois polynomiales sont construites à partir de paramètres relatifs à des points de vol simulés qui sont des états stabilisés de vol, lesdits paramètres étant définis par un opérateur au moyen d'un système de calcul de mécanique de vol dénommé ci-après simulateur de vol. Ledit simulateur de vol comprend notamment un calculateur de simulation permettant de mettre en oeuvre un modèle de vol. Un dit modèle de vol est un ensemble de formules mathématiques mettant en relation des informations de vol et donnant lieu à des algorithmes puis à des programmes informatiques introduits par exemple dans un calculateur dit de simulation. Le giravion modélisé est un giravion virtuel composé d'un ensemble de paramètres notamment aérodynamiques caractérisant l'un quelconque des giravions de ladite famille de giravions, cet ensemble de paramètres étant introduit dans le modèle de vol utilisé.

On pourra à ce propos se reporter au document YEW CHAI PAW et al. : Development and application of an integrated framework for small UAV flight control development » ; MECHATRONICS, vol. 21, n°5, aout 2011 (2011-08) page 789-802, XP028226794 qui décrit des modalités d'exploitation d'un simulateur de vol.

L'opérateur effectue des essais et des calculs au moyen du simulateur de vol, et obtient ainsi un ensemble d'informations sur des états stabilisés de vol à basses vitesses, lesdites informations étant utilisées ensuite pour élaborer les premières lois polynomiales par régression multilinéaire. Les premières lois polynomiales élaborées sont mémorisées par le calculateur de construction, notamment par validation et stockage par un opérateur dans des moyens de mémoire de construction associés au calculateur de construction.

-) élaboration d'un couple de deuxièmes lois polynomiales par vols d'essai au moyen du calculateur de construction en relation avec un calculateur d'essai en vol lui-même en relation avec des instruments de mesure équipant un giravion d'essai relevant de ladite famille. Les vols d'essai permettent de générer des informations relatives à des états stabilisés de vol à basses vitesses, lesdites informations étant ensuite utilisées pour élaborer par régression multilinéaire au moyen du calculateur de construction les deuxièmes lois polynomiales.

Les deuxièmes lois polynomiales sont des lois polynomiales de calcul de vitesses air du giravion d'essai déterminées par régression multilinéaire au moyen du calculateur de construction, d'une part à partir des vitesses air estimées respectivement longitudinale $V_x$ et latérale $V_y$ obtenues par application des premières lois polynomiales à des paramètres relatifs à des points de vols d'essai effectués à bord du giravion d'essai, et d'autre part à partir de la vitesse air longitudinale $LAS_{Vx}$ et la vitesse air latérale $LAS_{Vy}$ du giravion d'essai obtenues au moyen d'informations de mesure fournies par les instruments de mesure équipant le giravion d'essai.

Les informations relatives à des états stabilisés de vol à basses vitesses issues des vols d'essai comportent notamment la vitesse air longitudinale $LAS_{Vx}$ et la vitesse air latérale $LAS_{Vy}$ du giravion d'essai, ainsi que la vitesse air estimée longitudinale $V_x$ et la vitesse air estimée latérale $V_y$ calculées par les premières lois polynomiales activées notamment dans le calculateur de construction embarqué à bord du giravion d'essai, à partir des informations de mesure fournies par les instruments de mesure équipant le giravion d'essai.

b) ladite opération d'intégration de la règle de calcul, comprenant spécifiquement une opération d'intégration dans un calculateur d'exécution des premières lois polynomiales et des deuxièmes lois polynomiales. Cette opération d'intégration est suivie d'une opération de mise en relation du calculateur d'exécution avec les instruments de mesure équipant le giravion spécifique.

Il est à considérer la distinction faite entre le calculateur de construction exploité pour construire les premières lois polynomiales et les deuxièmes lois polynomiales, et le calculateur d'exécution intégrant la règle de calcul associant ces lois polynomiales. Le calculateur intégrant la règle de calcul est ensuite placé en relation avec les instruments de mesure du giravion spécifique, et est ainsi apte à déterminer les vitesses air du giravion spécifique sans notamment nécessiter une opération de calibration de la règle de calcul spécifique au giravion spécifique.

La règle de calcul mémorisée dans le calculateur de construction est plus particulièrement transférée et stockée dans des moyens de mémoire d'exécution associés au calculateur d'exécution. Cette opération d'intégration est notamment réalisée par stockage de chacune des premières lois polynomiales et de chacune des deuxièmes lois polynomiales par un opérateur dans les moyens de mémoire d'exécution. Le calculateur d'exécution est ensuite installé par l'opérateur à bord du giravion spécifique, en le plaçant, directement ou indirectement par l'intermédiaire de moyens adaptés du giravion, en relation avec les instruments de mesure équipant ce giravion spécifique et en relation avec les moyens d'affichage.

c) ladite opération d'exécution de la règle de calcul par le calculateur d'exécution, durant laquelle les vitesses air courantes sont déterminées à partir d'informations de mesure générées par les instruments de mesure du giravion spécifique. Les vitesses air courantes du giravion spécifique, respectivement vitesses air courante longitudinale

$LAS_{Vx}$ et vitesse air courante latérale $LAS_{Vy}$ sont plus particulièrement déterminées par exécution des premières lois polynomiales permettant de calculer les vitesses air estimées respectivement vitesse air estimée longitudinale $V_x$ et vitesse air estimée latérale $V_y$, puis par exécution des deuxièmes lois polynomiales corrigeant les vitesses air estimées respectivement vitesse air estimée longitudinale $V_x$ et vitesse air estimée latérale $V_y$.

L'exécution successivement des premières lois polynomiales et des deuxièmes lois polynomiales est spontanément et itérativement effectuée par le calculateur d'exécution. Une telle exécution de la règle de calcul est de préférence opérée lors des situations de vol stationnaire et/ou à basses vitesses du giravion spécifique susceptibles d'être détectées à partir de l'instrumentation de bord du giravion spécifique.

d) la dite opération finale d'affichage des vitesses air courantes $LAS_{Vx}$ et $LAS_{Vy}$ du giravion spécifique, durant laquelle les moyens d'affichage en communication avec ledit calculateur d'exécution, affichent lesdites vitesses air courantes respectivement vitesse air longitudinale $LAS_{Vx}$ et vitesse air latérale $LAS_{Vy}$ du giravion spécifique. Il est à considérer que les vitesses air courantes affichées peuvent être par analogie des informations issues des dites vitesses air courantes, notamment après traitement des dites vitesses air courantes par des moyens de filtrage tel que visés plus loin.

La règle de calcul mémorisée au calculateur d'exécution embarqué à bord d'un quelconque giravion spécifique, est constituée du couple de premières lois polynomiales et du couple de deuxièmes lois polynomiales, qui sont exécutées successivement par couple pour déterminer les vitesses air courantes du giravion spécifiques. La correction des vitesses air estimées $V_x$ et $V_y$ calculées à partir de l'exécution des premières lois polynomiales, est effectuée par exécution des deuxièmes lois polynomiales par le calculateur d'exécution.

Entre deux giravions spécifiques d'une même famille, la variation des caractéristiques aérodynamiques est négligeable. Une même règle de calcul associant les premières lois polynomiales et les deuxièmes lois polynomiales est exploitable pour un quelconque giravion spécifique de cette famille. Contrairement aux habitudes relatives aux systèmes de calcul de type VIMI ou AVC, la règle de calcul de la présente invention est applicable à un quelconque giravion spécifique d'une famille donnée, sans impliquer une calibration de la règle de calcul par vols d'essai spécifiques à chacun des giravions spécifiques.

L'utilisation de la simulation permet de générer au moins une base de données décrivant avec précision un ensemble d'états de vol stabilisés à basses vitesses faisant partie du domaine de vol du giravion. Il est considéré par domaine de vol du giravion l'étendue des diverses situations potentielles de progression en vol du giravion. La construction d'une telle base de données est réalisée à moindres coûts par rapport à des vols d'essai qui seraient nécessaires à une calibration de la règle de calcul et qui sont traditionnellement effectués pour chacun des giravions spécifiques.

La définition des premières lois polynomiales est réalisée en atelier par un opérateur qui n'est ni soumis aux contraintes météorologiques, ni à une disponibilité d'un giravion d'essai pour opérer une telle définition, ni encore à une immobilisation de longue durée d'un giravion d'essai et de son équipage.

Seule la définition des deuxièmes lois polynomiales correctives des résultats issus de l'application des premières lois polynomiales nécessite l'exploitation de vols d'essai, et cela sur un seul giravion d'essai relevant de ladite famille, en excluant de tels vols d'essai pour chacun des giravions spécifiques. Les premières lois polynomiales sont déterminées à partir de modèles de vol définis pour une dite famille donnée de giravions dont relève le giravion spécifique. L'exécution successive des premières lois polynomiales puis des deuxièmes lois polynomiales sur un quelconque giravion spécifique de cette famille permet d'obtenir les vitesses air courantes de ce giravion spécifique avec précision, fiabilité et pertinence.

Les vitesses airs courantes affichées sont précises, fiables et pertinentes pour un quelconque giravion spécifique, quelles que soient la masse, les conditions de vol ainsi que les conditions de centrage longitudinal et de centrage latéral du giravion spécifique. La définition des premières lois polynomiales en bureau d'étude par simulation permet de prendre en compte un nombre important de situations de vol, notamment tant au regard des caractéristiques intrinsèques d'un giravion d'une famille donnée qu'au regard des caractéristiques de chargement en emport du giravion, ou encore au regard de l'altitude de progression du giravion et des paramètres physicochimiques de l'air extérieur, tels que sa masse volumique, sa pression et de sa température.

L'utilisation de modèles de vol dans un simulateur permet de prendre en Compte non seulement une variation des paramètres relatifs à la mécanique de vol d'un giravion d'une famille dont relève le giravion spécifique, mais aussi la configuration aérodynamique d'un tel giravion. Un même modèle de vol peut être utilisé pour tous les giravions spécifiques relevant d'une même famille. Les modèles de vol procurent une représentativité optimisée des différents paramètres susceptibles d'influer sur le calcul des vitesses air courantes du giravion spécifique, en prenant en compte des phénomènes complexes tels que les interactions entre l'écoulement d'air généré par le ou les rotors d'une part, et la cellule et/ou les structures arrière du giravion d'autre part.

La construction de la deuxième règle de calcul est susceptible d'être réalisée à partir de points de vols d'essai en nombre limité, ce qui est avantageux au regard de la réduction des coûts induits par la mise en oeuvre d'une procédure de vols d'essai. L'utilisation du simulateur de vol permet de prendre en compte de nombreux points de vol simulés, procurant une amélioration à moindres coûts des résultats du calcul des vitesses air pour un quelconque giravion spécifique d'une dite famille de giravions spécifiques donnée.

La fonction des deuxièmes lois polynomiales est limitée à une éventuelle correction des résultats fournis par application des premières lois polynomiales. Une telle correction est potentiellement nécessaire du fait de l'existence d'éventuels écarts entre les résultats procurés par le simulateur de vol et les résultats procurés en vols réels.

Les valeurs respectives des vitesses air déterminées par le système de calcul sont précises. A titre indicatif l'erreur évaluée est potentiellement inférieure à 4 noeuds (kt).

Les paramètres des points de vol simulés sont notamment déterminées au moyen d'un modèle de vol décrivant le giravion modélisé de la dite famille, le dit modèle de vol étant préalablement saisi par un opérateur. Les paramètres relatifs aux points de vol simulés sont répertoriés dans une base de données, pour leur exploitation lors de l'élaboration des premières lois polynomiales. Les points de vol simulés sont notamment relatifs à une pluralité de situations simulées de vol stabilisé définies par un premier maillage.

Les premières lois polynomiales sont construites par le calculateur de construction par régression multilinéaire à partir des informations fournies par le simulateur de vol et associées aux points de vol simulés. Les premières lois polynomiales sont notamment des lois de calcul se présentant sous la forme polynomiale suivante :

$$\begin{cases} V_x = \sum_i C_{\alpha_i}.\alpha_i \\ V_y = \sum_j C_{\beta_j}.\beta_j \end{cases}$$

dans lesquelles premières lois polynomiales :

- $V_x$ correspond à une vitesse air estimée longitudinale,
- $V_y$ correspond à une vitesse air estimée latérale,

-) $\alpha_i$ et $\beta_j$ sont des monômes exprimés sous les formes respectives suivantes :

$$\alpha_i = \theta^{a_i}.\varphi^{b_i}.DTC^{c_i}.DTS^{d_i}.DT0^{e_i}.DTA^{f_i}.V_z^{g_i}.\sigma^{h_i}.N_r^{k_i}$$

$$\beta_j = \theta^{a_j}.\varphi^{b_j}.DTC^{c_j}.DTS^{d_j}.DT0^{e_j}.DTA^{f_j}.V_z^{g_j}.\sigma^{h_j}.N_r^{k_j}$$

dans lesquels monômes :

*) $\theta$ correspond à l'assiette longitudinale du giravion,
*) $\varphi$ correspond à l'assiette latérale du giravion,
*) **DTC** correspond au pas cyclique longitudinal des pales d'un rotor principal équipant le giravion,
*) **DTS** correspond au pas cyclique latéral des pales du dit rotor principal,
*) **DTO** correspond au pas collectif des pales du dit rotor principal,
*) **DTA** correspond au pas collectif des pales d'un rotor anti-couple équipant le giravion. Le rotor anti-couple est susceptible d'être du type caréné pour former un fenestron. Par analogie, le rotor anti-couple est susceptible d'être remplacé par un quelconque dispositif anti-couple dont les paramètres de mise en oeuvre sont pris en compte par transposition de manière analogue à la prise en compte du pas collectif des pales du dit rotor anti-couple.
*) $V_z$ correspond à la vitesse verticale du giravion,
*) $\sigma$ correspond à la masse volumique de l'air extérieur au giravion,
*) $N_r$ correspond au régime du dit rotor principal.
*) i, j, $a_i$, $b_i$, $c_i$, $d_i$, $e_i$, $f_i$, $g_i$, $h_i$ et $k_i$, $a_j$, $b_j$, $c_j$, $d_j$, $e_j$, $f_j$, $g_j$, $h_j$ et $k_j$ sont des paramètres constants définis par un opérateur de ladite simulation pour les giravions de ladite famille de giravions donnée.

- -) $C_{\alpha_i}$ sont des coefficients appliqués respectivement aux monômes $\alpha_i$ pour les giravions de ladite famille de giravions donnée. Les valeurs des dits coefficients $C_{\alpha i}$ sont calculées par régression multilinéaire relative à une première loi polynomiale de calcul de la vitesse air estimée longitudinale $V_x$.

- $C_{\beta j}$ sont des coefficients appliqués respectivement aux monômes $\beta_j$ pour les giravions de ladite famille de giravions donnée. Les valeurs des dits coefficients $C_{\beta j}$ sont calculées par régression multilinéaire relative à une première loi polynomiale de calcul de la vitesse air estimée latérale $V_y$.

Les situations simulées, considérées en vol stationnaire et/ou à basses vitesses d'un dit giravion modélisé, sont notamment choisies par l'opérateur définissant un premier maillage à partir des valeurs des paramètres préférés suivants :

*) la masse du giravion, considérée au moins selon chacune de deux situations extrêmes sinon encore selon au moins une situation médiane,

*) la position du centre de gravité du giravion, sélectivement intrinsèquement et chargé d'emports au regard de chacune des orientations longitudinale et latérale du giravion. La position du centre de gravité du giravion chargé d'emports est notamment considérée au moins selon chacune de deux situations extrêmes de chargement sinon encore selon au moins une situation médiane de chargement,

*) l'altitude évaluée selon la pression et la température de l'air extérieur au giravion, considérée au moins selon chacune de deux situations extrêmes sinon encore selon au moins une situation médiane,

*) la vitesse verticale du giravion, considérée au moins selon chacune d'une situation de descente et d'une situation de montée du giravion, sinon encore selon au moins une situation de maintien en palier du giravion,

*) la vitesse longitudinale estimée du giravion, considérée au moins selon chacune de deux vitesses maximales du dit giravion respectivement avant et arrière,

*) la vitesse latérale estimée du giravion, considérée au moins selon chacune de deux vitesses maximales respectivement droite et gauche du dit giravion.

Les points de vols d'essai sont notamment relatifs à une pluralité de situations d'essai de vol stabilisé du giravion d'essai sur lequel est embarqué le calculateur de construction. Les vitesses air courantes respectivement longitudinale $LAS_{Vx}$ et latérale $LAS_{Vy}$ sont mesurées par les instruments de mesure équipant le giravion d'essai, tel qu'un système de localisation satellitaire. Les situations d'essai sont par exemple réalisées par vent connu, notamment par vent nul, pour évaluer les vitesses air courantes à partir des vitesses sol du giravion d'essai mesurées par l'instrumentation embarquée à bord du giravion. Par vent nul, les vitesses air courantes sont assimilées aux vitesses sol courantes.
Les deuxièmes lois polynomiales sont plus particulièrement élaborées par le calculateur de construction en se présentant sous la forme polynomiale suivante :

$$\begin{cases} LAS_{Vx} = \sum_m C_m.Vx^{\gamma_m}Vy^{\delta_m} \\ LAS_{Vy} = \sum_n C_n.Vx^{\gamma_n}Vy^{\delta_n} \end{cases}$$

dans lesquelles deuxièmes lois polynomiales, pour un giravion d'essai relevant de ladite famille sur lequel est embarqué le système de calcul :

$LAS_{Vx}$ est la vitesse air courante longitudinale du giravion d'essai,
$LAS_{Vy}$ est la vitesse air courante latérale du giravion d'essai,
m, n, $\gamma_m$, $\delta_m$, $\gamma_n$, et $\delta_n$ sont des paramètres constants définis par un opérateur,
-) $C_m$ sont des coefficients appliqués respectivement aux monômes $Vx^{\gamma_m}Vy^{\delta_m}$, coefficients dont les valeurs sont calculées par régression multilinéaire relative à une deuxième loi polynomiale de calcul de la vitesse air courante longitudinale $LAS_{Vx}$,
-) $C_n$ sont des coefficients appliqués respectivement aux monômes $Vx^{\gamma_n}Vy^{\delta_n}$, coefficients dont les valeurs sont calculées par régression multilinéaire relative à une deuxième loi polynomiale de calcul de la vitesse air courante latérale LAS$_{Vy}$.

La présente invention a aussi pour objet un dispositif de mise en oeuvre d'un procédé tel qu'il vient d'être décrit.

Le dispositif comprend des moyens de construction de la règle de calcul exploitée pour déterminer les vitesses air courantes LAS$_{Vx}$ et LAS$_{Vy}$ d'un giravion spécifique en situation de vol stationnaire et/ou à basses vitesses et des moyens d'exécution de la règle de calcul embarqués à bord du giravion spécifique. Le dispositif est exploité pour élaborer la règle de calcul, et plus particulièrement pour construire les premières lois polynomiales et les deuxièmes lois polynomiales sans contrainte de procédures traditionnelles de calibration appliquées par vols d'essai à ce giravion spécifique.

Les moyens de construction comportent :

*) un dit simulateur de vol générateur desdits paramètres relatifs à des points de vol simulés. Le simulateur de vol comprend notamment des moyens de saisie d'informations par l'opérateur de situations simulées et de caractéristiques relatives à un giravion de ladite famille. Des premiers moyens de transfert sont exploités par un opérateur pour transférer les données issues de la simulation et associées aux points de vol simulés depuis le simulateur de vol vers des moyens de mémoire de construction associés au dit calculateur de construction.

*) des instruments de mesure équipant un dit giravion d'essai, sont en relation avec un calculateur d'essai en vol générateur desdits paramètres de vol d'essai. Les moyens de construction comprennent encore des moyens de validation par l'opérateur des paramètres relatifs aux points de vols d'essai comprenant des vitesses sol correspondantes. Des deuxièmes moyens de transfert sont exploités par un opérateur pour transférer ces paramètres et vitesses sol, notamment depuis un calculateur d'essai en vol vers le calculateur de construction, et plus particulièrement vers les moyens de mémoire de construction qui lui sont associés. Le calculateur d'essai en vol est un outil de calcul intermédiaire entre l'instrumentation de bord et le calculateur de construction, le calculateur de construction étant indifféremment embarqué à bord du giravion d'essai ou situé au sol. Le calculateur de construction est apte à élaborer par régression multilinéaire ledit couple de premières lois polynomiales selon les paramètres relatifs aux points de vol simulés et apte à élaborer par régression multilinéaire ledit couple de deuxièmes lois polynomiales par application des premières lois polynomiales selon les paramètres de vol d'essai.

*) des troisièmes moyens de transfert de chacune des premières lois polynomiales et de chacune des deuxièmes lois polynomiales depuis les moyens de mémoire de construction vers des moyens de mémoire d'exécution associés au calculateur d'exécution. La règle de calcul intégrant le couple de premières lois polynomiales et le couple de deuxièmes lois polynomiales, l'opérateur exploite les troisièmes moyens de transfert pour intégrer la règle de calcul dans les moyens de mémoire d'exécution.

*) des moyens de commande de la mise en oeuvre par l'opérateur du simulateur, des différents moyens de transfert et du calculateur de construction.

Selon une forme préférée de réalisation, lesdits moyens d'exécution comportent des dits moyens de filtrage comprenant des dits moyens de détection d'une situation de vol non stabilisé du giravion spécifique et desdits moyens de lissage.

La présente invention a aussi pour objet un système de calcul de vitesses air courantes LAS$_{Vx}$ et LAS$_{Vy}$ d'un giravion spécifique en situation de vol stationnaire et/ou à basses vitesses. Les vitesses air courantes sont respectivement une vitesse air courante longitudinale LAS$_{Vx}$ et une vitesse air courante latérale LAS$_{Vy}$. Le système de calcul est apte à être embarqué et à fonctionner à bord du giravion spécifique, à partir de l'exécution par le calculateur d'exécution d'une règle de calcul élaborée à partir de la mise en oeuvre du procédé tel que décrit.

Le système de calcul comprend des moyens d'exécution comportant le calculateur d'exécution qui est placé en relation avec des instruments de mesure générateurs d'informations de mesure au moins relatives au comportement et à l'environnement extérieur du giravion spécifique. Le calculateur d'exécution est aussi en relation avec des moyens d'affichage des vitesses air courantes LAS$_{Vx}$ et LAS$_{Vy}$ déterminée par le calculateur d'exécution. Le calculateur d'exécution intègre une règle de calcul des vitesses air courantes comportant des paramètres de calcul et étant exécutable en utilisant des dites informations de mesure.

Les moyens d'affichage permettent d'indiquer au pilote les valeurs déterminées par le système de calcul et relatives aux vitesses air préalablement calculées par le calculateur d'exécution. Le calculateur d'exécution, ou par analogie les dits moyens de mémoire d'exécution qui lui sont associés, intègrent la règle de calcul des vitesses air à déterminer LAS$_{Vx}$ et LAS$_{Vy}$ comportant des paramètres de calcul relatifs aux dites informations de mesure.

La règle de calcul associe deux couples de lois polynomiales de calcul exécutables par couple successivement par le calculateur d'exécution. Un couple de premières lois polynomiales est constitué de deux lois de calcul de vitesses air estimées, respectivement une vitesse air estimée longitudinale $V_x$ et une vitesse air estimée latérale $V_y$, lesdites lois de calcul étant élaborées à partir de l'exploitation d'une base de données répertoriant une pluralité de points de vol simulés. Un couple de deuxièmes lois polynomiales est constitué de deux lois de calcul des vitesses air courantes respectivement vitesse air courante longitudinale $LAS_{Vx}$ et vitesse air courante latérale $LAS_{Vy}$, lesdites lois de calcul utilisant des vitesses air estimées respectivement longitudinale $V_x$ et latérale $V_y$ préalablement calculées par les premières lois polynomiales.

Selon une forme préférée de réalisation, le système de calcul comporte des moyens de filtrage vis-à-vis de la pertinence des vitesses air courantes $LAS_{Vx}$ et $LAS_{Vy}$ calculées par application de la règle de calcul. Les moyens de filtrage sont interposés entre le calculateur d'exécution et les moyens d'affichage. Les moyens de filtrage sont générateurs d'informations à afficher par les moyens d'affichage, au moins relatives aux vitesses air courantes, respectivement vitesse air courante longitudinale $LAS_{Vx}$ et vitesse air courante latérale $LAS_{Vy}$, déterminées par le calculateur d'exécution par application de la règle de calcul.

De préférence, les moyens de filtrage comprennent des moyens de détection d'une situation de vol non stabilisé du giravion spécifique. La génération par les moyens de filtrage d'une information à afficher relative à un signal d'alerte est placée sous la dépendance des dits moyens de détection. Le signal d'alerte correspond à une telle situation de vol non stabilisé détectée.

De préférence encore, les moyens de filtrage comprennent des moyens de lissage à une fréquence temporelle donnée des vitesses air courantes $LAS_{Vx}$ et $LAS_{Vy}$ déterminées par le calculateur d'exécution par application de la règle de calcul. Une opération de lissage est effectuée, par exemple par rafraichissement des vitesses air calculées par la règle de calcul selon une période déterminée égale à l'inverse de la fréquence temporelle évoquée, ou par exemple encore par calcul et affichage d'une moyenne glissante dans le temps des vitesses air courantes. Cette opération procure un confort à l'équipage en évitant d'afficher des informations qui changent rapidement et qui relèvent de faibles variations inutiles et difficilement exploitables par l'équipage. La génération par les moyens de filtrage d'informations à afficher relatives à des vitesses air lissées du giravion spécifique est placée sous la dépendance des dits moyens de lissage. Les informations à afficher est plus particulièrement relative à des vitesses air lissées du giravion spécifique, respectivement vitesse air lissée longitudinale $V_{ax}$ et vitesse air lissée latérale $V_{ay}$.

Selon le procédé de la présente invention, il est aussi subsidiairement à considérer une phase d'exploitation du calculateur d'exécution embarqué sur un quelconque giravion spécifique équipé du système de calcul. Une telle phase d'exploitation met notamment en oeuvre les opérations suivantes, de préférence effectuées à intervalles réguliers et brefs adaptés à la génération d'informations récentes exploitables par le pilote du giravion spécifique :

-) collecte et transmission au calculateur d'exécution par une instrumentation de bord du giravion spécifique d'informations de mesure relatives à des paramètres de points de vol appliqués prédéfinis selon paramètres relatifs aux points de vol simulés.

-) exécution par le calculateur d'exécution des dites premières lois polynomiales à partir des informations de mesure préalablement collectées Pour calculer les vitesses air estimées du giravion spécifique.

-) exécution des deuxièmes lois polynomiales par le calculateur d'exécution à partir des vitesses air estimées Vx et Vy, et calcul des vitesses air courantes du giravion spécifique, respectivement vitesse air courante longitudinale $LAS_{Vx}$ et vitesse air courante latérale $LAS_{Vy}$.

-) de préférence, les informations relatives aux vitesses air courantes $LAS_{Vx}$ et $LAS_{Vy}$ sont traitées par les moyens de filtrage préalablement à leur affichage. Un tel traitement est générateur des dites informations à afficher relatives à l'une quelconque au moins des informations relatives aux vitesses air lissées $V_{ax}$ et $V_{ay}$ et/ou relatives au signal d'alerte.

-) affichage par des moyens d'affichage d'informations relatives aux vitesses air courantes $LAS_{Vx}$ et $LAS_{Vy}$ du giravion spécifique, sinon par analogie d'informations à afficher issues des dites informations relatives aux vitesses air courantes $LAS_{Vx}$ et $LAS_{Vy}$ du giravion spécifique. Les informations à afficher sont dans ce cas des informations relatives aux vitesses air lissées $V_{ax}$ et $V_{ay}$ respectivement issues des vitesses air courantes $LAS_{Vx}$ et $LAS_{Vy}$ traitées par les moyens de lissage, et/ou une information relative à un dit signal d'alerte pour prévenir d'un éventuel défaut de pertinence des vitesses air du giravion affichées.

En phase d'exploitation du calculateur d'exécution embarqué sur un quelconque giravion spécifique, le procédé comprend préférentiellement les opérations suivantes :

-) détection par des moyens de détection d'une situation de vol non stabilisé du giravion spécifique,

-) traitement par calcul des vitesses air courantes préalablement à leur affichage, par des moyens de filtrage générateurs d'une information à afficher par les moyens d'affichage, ladite information à afficher étant au moins relative à un signal d'alerte indiquant ladite situation de vol non stabilisé préalablement détectée.

L'opération de traitement par calcul des vitesses air courantes comprend notamment une opération de lissage à une fréquence temporelle donnée des vitesses air courantes par des moyens de lissage, sous la dépendance desquels moyens de lissage est placée la génération par les moyens de filtrage d'informations à afficher par les moyens d'affichage relatives à des vitesses air lissées respectivement vitesse air lissée longitudinale $V_{ax}$ et vitesse air lissée latérale $V_{ay}$ du giravion spécifique.

Le système de calcul procure une détermination des vitesses air du giravion sans utilisation d'informations éventuellement fournies par des sondes anémométriques susceptibles d'être inefficaces pour une vitesse air faible du giravion. Les informations de mesure transmises par les instruments de mesure au calculateur sont des informations couramment disponibles à bord d'un giravion pour d'autres fonctions et/ou équipements du giravion spécifique, ce qui évite un accroissement inopportun du coût du système de calcul.

Les dites sondes anémométriques sont néanmoins susceptibles d'être avantageusement exploitées pour constituer les dits moyens de détection d'une situation de vol stationnaire et/ou à basses vitesses du giravion spécifique.

Il sera compris que les vitesses air courantes du giravion spécifique sont avantageusement calculées par application du procédé de la présente invention en situation de vol stationnaire et/ou à basses vitesses, sans préjuger de l'application possible du dit procédé pour le calcul des vitesses air courantes du giravion spécifique en d'autres situations de vol, telles que les situations de vol de croisière notamment.

Des exemples de réalisation de la présente invention vont être décrits en relation avec les figures de la planche annexée, dans laquelle :

- la fig.1 est un schéma illustrant un système de calcul selon une forme préférée de réalisation de la présente invention, et sa méthode de mise en oeuvre pour un quelconque giravion spécifique.

- la fig.2 est un schéma illustrant un système de calcul représenté sur la fig.1, et sa méthode de mise en oeuvre pour définir une règle de calcul intégrée à un calculateur d'exécution que comporte ledit système de calcul.

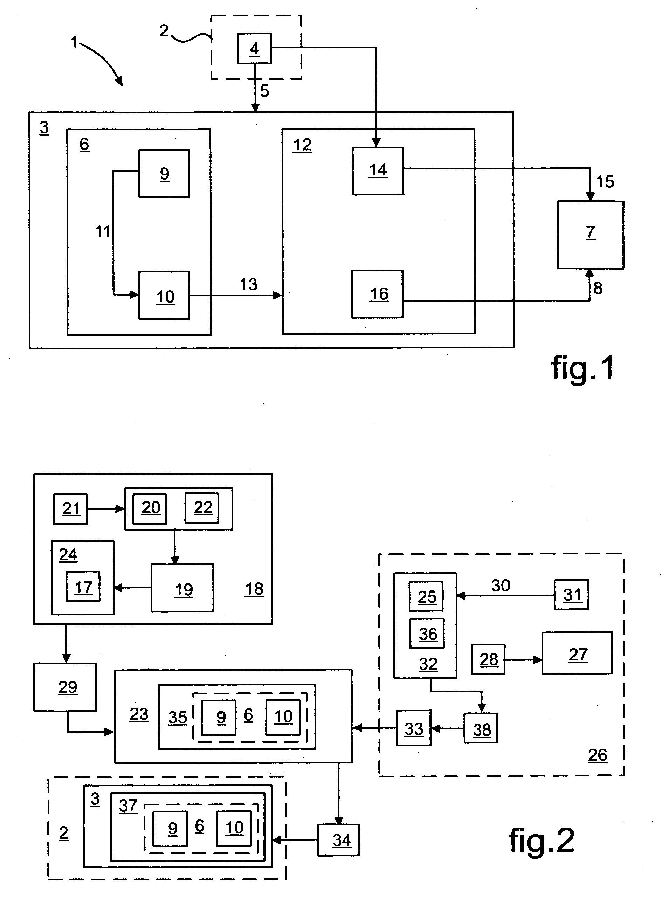

Sur la fig.1, un système de calcul 1 est organisé pour être embarqué à bord d'un quelconque giravion spécifique 2 d'une famille de giravions donnée. Ce système de calcul 1 est organisé pour fournir par voie d'affichage à un pilote du giravion spécifique 2 des informations relatives à des vitesses air 13 courantes du giravion spécifique 2 en situation de vol stationnaire et/ou à basses vitesses. Les vitesses air 13 déterminées par le système de calcul 1 sont notamment respectivement une vitesse air longitudinale $LAS_{Vx}$ et une vitesse air latérale $LAS_{Vy}$.

Le système de calcul 1 comprend un calculateur d'exécution 3 en relation avec des instruments de mesure 4 d'une instrumentation de bord du giravion spécifique 2. Les instruments de mesure 4 fournissent au calculateur d'exécution 3 diverses informations de mesure 5 relatives à l'état de progression et/ou à l'environnement extérieur du giravion spécifique 2. Les informations de mesure 5 transmises au calculateur d'exécution 3 sont par exemple relatives à l'assiette du giravion spécifique 2, au pas cyclique des pales d'un rotor principal équipant le giravion spécifique 2, au pas collectif des pales du rotor principal et/ou d'un rotor anti-couple équipant le giravion spécifique 2, à la vitesse verticale du giravion spécifique 2, au régime du moteur d'entraînement du ou des rotors, ou encore à la masse volumique de l'air extérieur au giravion spécifique 2.

De telles informations de mesure 5 sont fournies par des instruments de mesure 4 équipant couramment les giravions et connus en eux-mêmes. Le calculateur d'exécution 3 exploite les informations de mesure 5 pour déterminer les vitesses air 13 courantes du giravion spécifique 2 par application d'une règle de calcul 6 intégrée au calculateur d'exécution 3. Le calculateur d'exécution 3 est en relation avec des moyens d'affichage 7, tels qu'écran ou analogue équipant couramment les giravions. Les moyens d'affichage 7 procurent au pilote du giravion un affichage d'informations à afficher 8 relatives aux vitesses air 13 courantes du giravion spécifique 2, préalablement déterminées par le calculateur d'exécution 3 par application de la règle de calcul 6.

La règle de calcul 6 associe deux couples de lois polynomiales de calcul 9,10 mises en oeuvre successivement pour calculer les vitesses air 13 courantes du giravion spécifique 3. Lorsque le système de calcul 1 est en phase d'exploitation, et que le giravion spécifique 2 est notamment en situation de vol stationnaire et/ou à basses vitesses, les instruments de mesure 4 transmettent au calculateur d'exécution 3 des informations de mesure 5 relatives à des points de vol appliqués. Un point de vol appliqué correspond à l'état de vol du giravion spécifique 2 à un instant donné. Ladite transmission des informations de mesure 5 est susceptible d'être effectuée en continu ou à intervalles temporels réguliers.

Le calculateur d'exécution 3 applique un couple de premières lois polynomiales 9 à partir des dites informations de mesure 5 qui correspondent au point de vol appliqué, pour déterminer des vitesses air estimées 11 respectivement vitesse air estimée longitudinale $V_x$ et vitesse air estimée latérale $V_y$. Les vitesses air estimées 11 calculées par les premières lois polynomiales 9 sont ensuite éventuellement corrigées par application d'un couple de deuxièmes lois polynomiales 10 correspondantes, pour déterminer les vitesses air 13 courantes du giravion spécifique 2.

Le système de calcul 1 comprend des moyens de filtrage 12 des vitesses air 13 courantes du giravion spécifique 2 déterminées par application de la règle de calcul 6. Les moyens de filtrage 12 permettent d'accroître la pertinence et la lisibilité des informations à afficher 8 transmises aux moyens d'affichage 7 et relatives aux vitesses air courantes calculées.

Les vitesses air courantes du giravion spécifique 2 sont pertinentes en situation de vol stabilisé du giravion spécifique 2. Il est souhaitable d'alerter le pilote du giravion spécifique 2 d'éventuelles informations affichées qui serait erronées en raison d'une situation de vol non stabilisé du giravion spécifique 2. Les moyens de filtrage 12 comprennent à cet effet des moyens de détection 14 d'une situation de vol du giravion spécifique 2 non stabilisé, sous la dépendance desquels une information à afficher relative à un signal d'alerte 15 est le cas échéant générée.

En situation de vol stabilisé, le pilotage d'un giravion induit en permanence de légères variations des informations transmises par les instruments de mesure 4. Les vitesses air déterminées 13 par application de la règle de calcul 6 subissent en conséquence de légères variations. Il est souhaitable que les informations affichées relatives aux vitesses air déterminées 13 par la règle de calcul 6 soient stables. Une telle stabilité d'affichage d'informations correspond à un rafraichissement des informations affichées à une fréquence apte à rendre interprétables ces informations par le pilote du giravion spécifique 2. A cet effet, les moyens de filtrage 12 comprennent des moyens de lissage 16 à une fréquence temporelle donnée des vitesses air 13 calculées, sous la dépendance desquels des informations à afficher 8 relatives à des vitesses air lissées $V_{ax}$ et $V_{ay}$ sont générées. Les vitesses air lissées $V_{ax}$ et $V_{ay}$ sont issues des vitesses air 13 déterminées par la règle de calcul 6 et traitées par les moyens de lissage 16. Les vitesses air lissées sont respectivement une vitesse air lissée longitudinale $V_{ax}$ et vitesse air lissée latérale $V_{ay}$.

Sur la fig.2 est illustrée une opération d'élaboration de la règle de calcul 6, et plus particulièrement des premières lois polynomiales 9 et des deuxièmes lois polynomiales 10 dans des opérations distinctes de définition de ces lois polynomiales.

Les premières lois polynomiales 9 sont définies en atelier par régression multilinéaire à partir de points de vol simulés 17. Un simulateur de vol 18 est exploité pour définir des points de vol simulés 17. Les points de vol simulés 17 sont déterminés par application de modèles de vol 19 à partir de diverses situations simulées 20 de vol stabilisé appliquées au regard de caractéristiques d'un giravion modélisé 22 d'une famille donnée. Ladite famille correspond à celle dont relève le giravion spécifique 2 sur lequel est embarqué le système de calcul 1 en phase d'exploitation telle qu'illustrée sur la fig.1.

Des moyens de saisie 21 permettent à un opérateur de paramétrer les diverses situations simulées 20. Les situations simulées 20 sont traités par application des modèles de vol 19, pour construire une première base de données 24 répertoriant les paramètres relatifs aux divers points de vol simulés 17. A partir des résultats de la simulation, les paramètres des points de vol simulés 17 répertoriés dans la première base de données 24 sont exploités par un calculateur de construction 23 pour définir les premières lois polynomiales 9 par régression multilinéaire. Des premiers moyens de transfert 29 sont exploités pour transmettre les valeurs des paramètres des points de vol simulés 17 à des moyens de mémoire de construction 35 associés au calculateur de construction 23.

La pertinence et la fiabilité du résultat des vitesses air estimées obtenu par calcul à partir de ces premières lois polynomiales, doivent être au besoin corrigées à partir de l'application des deuxièmes lois polynomiales 10 pour obtenir des vitesses air courantes pertinentes et fiables du giravion spécifiques 2.

Les deuxièmes lois polynomiales 10 sont définies par régression multilinéaire à partir de points de vols d'essai 25 et des vitesses air estimées calculées par les premières lois polynomiales 9 de calcul. Les points de vols d'essai 25 sont déterminés au cours de vols d'essai effectués à bord d'un giravion d'essai 26 relevant de la même famille que le giravion modélisé pris en compte par le simulateur de vol 18 pour la définition des premières lois polynomiales 9. Les points de vols d'essai 25 correspondent à diverses situations d'essai 27 de vol stabilisé effectuées à bord du giravion d'essai 26.

La prise en compte d'une situation d'essai 27 est validée par un opérateur à partir de moyens de validation 28, et des paramètres relatifs aux points de vols d'essai 25 sont définis à partir d'informations de mesure 30 transmises par des instruments de mesure 31 équipant le giravion d'essai 26. Les paramètres relatifs aux points de vols d'essai 25 sont répertoriés dans une deuxième base de données 32, et sont exploités pour calculer les vitesses air estimées 11 par application des premières lois polynomiales 9. Les deuxièmes lois polynomiales 10 sont définies par régression multilinéaire à partir des paramètres relatifs aux points de vol d'essai 25 et des vitesses air estimées 11 précédemment calculées. Les deuxièmes lois polynomiales 10 dont définies par le calculateur de construction 23, le cas échéant par l'intermédiaire d'un calculateur d'essai en vol 38 embarqué à bord du giravion d'essai 26. La fonction d'un tel calculateur d'essai en vol 38 est fondée sur une collecte d'informations susceptibles d'être exploitées au sol par le calculateur de construction 23. Les informations collectées par le calculateur d'essai en vol 38 sont indifféremment relatives aux informations de mesure 5 transmises par les instruments de mesure 4 et/ou relatives aux vitesses air estimées 11 calculées par le calculateur d'essai en vol 38 intégrant les premières lois polynomiales 9. Les vols d'essai étant effectués par vent naturel connu, et de préférence par vent nul, il est pris en considération les vitesses sol 36 correspondantes aux points de vols d'essai 25 et mesurées par les instruments de mesure 31 embarqués sur le giravion d'essai 26.

Des deuxièmes moyens de transfert 33 sont exploités pour transmettre aux moyens de mémoire de construction 35 associés au calculateur de construction 23, les paramètres relatifs aux points de vols d'essai 25 comprenant les vitesses air courantes du giravion d'essai 25 déduites des vitesses sol 36 mesurées, indifféremment par le calculateur de construction 23 ou par analogie par le calculateur d'essai en vol 38. A partir de l'exécution des premières lois polynomiales 9 par le calculateur 23 et des informations collectées par vols d'essai, le calculateur de construction 23 élabore les deuxièmes lois polynomiales 10.

La règle de calcul 6 intégrant les premières lois polynomiales 9 et les deuxièmes lois polynomiales 10 étant élaborée, des troisièmes moyens de transfert 34 transmettent la règle de calcul 6 à des moyens de mémoire d'exécution 37 associés à un calculateur d'exécution 3 destiné à être installé sur un giravion spécifique.

Il est à considérer que les vitesses air courantes du giravion spécifique calculées à partir du système de calcul dont le giravion spécifique est équipé, sont susceptibles d'être exploitées par divers équipements du giravion, et notamment par des équipements d'assistance au pilotage du giravion, pilote automatique ou analogue par exemple.

## Revendications

1.  Procédé de calcul puis d'affichage de vitesses air courantes (13) d'un giravion spécifique (2) évoluant à basses vitesses, les vitesses air courantes (13) étant respectivement une vitesse air courante longitudinale $LAS_{Vx}$ et une vitesse air courante latérale $LAS_{Vy}$, comprenant :

    -) une opération d'élaboration d'une règle de calcul (6) desdites vitesses air courantes (13), ladite opération d'élaboration comprenant une opération de vols d'essai à bord d'un giravion et une opération d'intégration de ladite règle de calcul (6) dans un calculateur placé en relation avec des instruments de mesure (4) équipant le giravion spécifique (2),
    -) une opération d'exécution en vol à bord du giravion spécifique (2) de la règle de calcul (6) pour déterminer lesdites vitesses air courantes (13) à partir d'informations de mesure (5) fournies par les instruments de mesure (4) du giravion spécifique (2), et une opération d'affichage desdites vitesses air courantes (13) par des moyens d'affichage (7) équipant le giravion spécifique (2),

    **caractérisé en ce que** :

    a) ladite opération d'élaboration de la règle de calcul (6) comprend les opérations spécifiques suivantes :

    -) élaboration au moyen d'un calculateur de construction (23) d'un couple de premières lois polynomiales (9) de calcul de vitesses air estimées (11), respectivement d'une vitesse air estimée longitudinale $V_x$ et d'une vitesse air estimée latérale $V_y$, d'un giravion modélisé d'une famille dont relève le giravion spécifique (2), les premières lois polynomiales (9) étant construites par régression multilinéaire par le calculateur de construction (23) à partir de paramètres relatifs à des points de vol simulés (17) définis au moyen d'un simulateur de vol (18),
    -) élaboration par vols d'essai (25) au moyen du calculateur de construction (23) en relation avec un calculateur d'essai en vol (38) lui-même en relation avec des instruments de mesure (31) équipant un giravion d'essai (26) relevant de ladite famille, d'un couple de deuxièmes lois polynomiales (10) de calcul de vitesses air du giravion d'essai déterminées par régression multilinéaire au moyen du calculateur de construction (23) d'une part à partir des vitesses air estimées (11), respectivement longitudinale $V_x$ et latérale $V_y$, obtenues par application des premières lois polynomiales à des paramètres relatifs à des points de vols d'essai (25) effectués à bord du giravion d'essai (26), et d'autre part à partir de la vitesse air longitudinale $LAS_{Vx}$ et la vitesse air latérale $LAS_{Vy}$ du giravion d'essai (26) obtenues au moyen d'informations de mesure (30) fournies par les instruments de mesure (31) équipant le giravion d'essai (26),

    b) ladite opération d'intégration comprend l'intégration dans un calculateur d'exécution (3) des premières lois polynomiales (9) et des deuxièmes lois polynomiales (10), l'opération d'intégration étant suivie d'une opération de mise en relation du calculateur d'exécution (3) avec les instruments de mesure (4) équipant le giravion spécifique (2),
    c) durant ladite opération d'exécution, les vitesses air courantes (13) sont déterminées à partir d'informations de mesure (5) générées par les instruments de mesure (4), par exécution des premières lois polynomiales (9) permettant de calculer les vitesses air estimées respectivement vitesse air estimée longitudinale $V_x$ et vitesse

air estimée latérale V$_y$, puis par exécution des deuxièmes lois polynomiales (10) corrigeant les vitesses air estimées,
d) durant ladite opération finale d'affichage, les moyens d'affichage (7), en communication avec ledit calculateur d'exécution (3), affichent lesdites vitesses air courantes (13) respectivement vitesse air longitudinale LAS$_{Vx}$ et vitesse air latérale LAS$_{Vy}$ du giravion spécifique (2).

2. Procédé selon la revendication 1,
**caractérisé en ce que** les paramètres des points de vol simulés (17) sont déterminées au moyen d'un modèle de vol (19) décrivant le giravion modélisé, le dit modèle de vol étant préalablement saisi par un opérateur, les paramètres relatifs aux points de vol simulés (17) étant répertoriés dans une base de données (22), et étant relatifs à une pluralité de situations simulées (20) de vol stabilisé définies par un premier maillage.

3. Procédé selon l'une quelconque des revendications 1 et 2,
**caractérisé en ce que** les premières lois polynomiales (9) sont construites par le calculateur de construction (23) à partir de la forme polynomiale suivante :

$$\begin{cases} V_x = \sum_i C_{\alpha_i}.\alpha_i \\ V_y = \sum_j C_{\beta_j}.\beta_j \end{cases}$$

dans lesquelles premières lois polynomiales :

-) $V_x$ correspond à une vitesse air estimée (11) longitudinale,
-) $V_y$ correspond à une vitesse air estimée (11) latérale,
-) $\alpha_i$ et $\beta_j$ sont des monômes exprimés sous les formes respectives suivantes :

$$\alpha_i = \theta^{a_i}.\varphi^{b_i}.DTC^{c_i}.DTS^{d_i}.DT0^{e_i}.DTA^{f_i}.V_z^{g_i}.\sigma^{h_i}.N_r^{k_i}$$

$$\beta_j = \theta^{a_j}.\varphi^{b_j}.DTC^{c_j}.DTS^{d_j}.DT0^{e_j}.DTA^{f_j}.V_z^{g_j}.\sigma^{h_j}.N_r^{k_j}$$

dans lesquels monômes :

\*) $\theta$ correspond à l'assiette longitudinale du giravion,
\*) $\varphi$ correspond à l'assiette latérale du giravion,
\*) **DTC** correspond au pas cyclique longitudinal des pales d'un rotor principal équipant le giravion,
\*) **DTS** correspond au pas cyclique latéral des pales du dit rotor principal,
\*) **DTO** correspond au pas collectif des pales du dit rotor principal,
\*) **DTA** correspond au pas collectif des pales d'un rotor anti-couple équipant le giravion,
\*) $V_z$ correspond à la vitesse verticale du giravion,
\*) $\sigma$ correspond à la masse volumique de l'air extérieur au giravion,
\*) $N_r$ correspond au régime du dit rotor principal.
\*) i,j,$a_i$, $b_i$, $c_i$, $d_i$, $e_i$, $f_i$, $g_i$, $h_i$ et $k_i$, $a_j$, $b_j$, $c_j$, $d_j$, $e_j$, $f_j$, $g_j$, $h_j$ et $k_j$ sont des paramètres constants définis par un opérateur de ladite simulation pour les giravions de ladite famille de giravions donnée.

-) $C_{\alpha_i}$ sont des coefficients appliqués respectivement aux monômes $\alpha_i$ pour les giravions de ladite famille de giravions donnée, les valeurs des dits coefficients $C_{\alpha_i}$ étant calculées par régression multilinéaire relative à une première loi polynomiale de calcul de la vitesse air estimée longitudinale V$_x$,
-) $C_{\beta_j}$ sont des coefficients appliqués respectivement aux monômes $\beta_j$ pour les giravions de ladite famille de giravions donnée, les valeurs des dits coefficients $C_{\beta_j}$ étant calculées par régression multilinéaire relative à une première loi polynomiale de calcul de la vitesse air estimée latérale $V_y$.

4. Procédé selon l'une quelconque des revendications 2 et 3,
**caractérisé en ce que** les dites situations simulées (20), considérées en vol à basses vitesses d'un dit giravion modélisé, sont choisies par l'opérateur définissant un premier maillage à partir des valeurs des paramètres suivants :

*) la masse du giravion, considérée au moins selon chacune de deux situations extrêmes sinon encore selon au moins une situation médiane,

*) la position du centre de gravité du giravion, sélectivement intrinsèquement et chargé d'emports au regard de chacune des orientations longitudinale et latérale du giravion, la position du centre de gravité du giravion chargé d'emports étant considérée au moins selon chacune de deux situations extrêmes de chargement sinon encore selon au moins une situation médiane de chargement,

*) l'altitude évaluée selon la pression et de la température de l'air extérieur à un giravion, considérée au moins selon chacune de deux situations extrêmes sinon encore selon au moins une situation médiane,

*) la vitesse verticale du giravion, considérée au moins selon chacune d'une situation de descente et d'une situation de montée du giravion, sinon encore selon au moins une situation de maintien en palier du giravion,

*) la vitesse longitudinale estimée du giravion, considérée au moins selon chacune de deux vitesses maximales respectivement avant et arrière,

*) la vitesse latérale estimée du giravion, considérée au moins selon chacune de deux vitesses maximales respectivement droite et gauche.

5. Procédé selon l'une quelconque des revendications 1 à 4,
**caractérisé en ce que** les points de vol d'essai sont relatifs à une pluralité de situations d'essai (27) de vol stabilisé du giravion d'essai (26) sur lequel est embarqué le calculateur de construction (23), les vitesses air (13) courantes respectivement longitudinale $LAS_{Vx}$ et latérale $LAS_{Vy}$ étant mesurées par les instruments de mesure (31) équipant le giravion d'essai (26),

6. Procédé selon l'une quelconque des revendications 1 à 5,
**caractérisé en ce que** les deuxièmes lois polynomiales (10) sont élaborées par le calculateur de construction (23) en se présentant sous la forme polynomiale suivante :

$$\begin{cases} LAS_{Vx} = \sum_{m} C_m . Vx^{\gamma_m} Vy^{\delta_m} \\ LAS_{Vy} = \sum_{n} C_n . Vx^{\gamma_n} Vy^{\delta_n} \end{cases}$$

dans lesquelles deuxièmes lois polynomiales (10), pour un giravion d'essai relevant de ladite famille sur lequel est embarqué le système de calcul (1) :

-) $LAS_{Vx}$ est la vitesse air courante longitudinale du giravion d'essai (26),
-) $LAS_{Vy}$ est la vitesse air courante latérale du giravion d'essai (26),
-) m, n, $\gamma_m$, $\delta_m$, $\gamma_n$, et $\delta_n$ sont des paramètres constants définis par un opérateur,
-) $C_m$ sont des coefficients appliqués respectivement aux monômes $Vx^{\gamma_m} Vy^{\delta_m}$, coefficients dont les valeurs sont calculées par régression multilinéaire relative à une deuxième loi polynomiale de calcul de la vitesse air courante longitudinale $LAS_{Vx}$,
-) $C_n$ sont des coefficients appliqués respectivement aux des monômes $Vx^{\gamma_n} Vy^{\delta_n}$, coefficients dont les valeurs sont calculées par régression multilinéaire relative à une deuxième loi polynomiale de calcul de la vitesse air courante latérale $LAS_{Vy}$.

7. Procédé selon l'une quelconque des revendications 1 à 6,
**caractérisé en ce qu'**en phase d'exploitation du calculateur d'exécution (3) embarqué sur un quelconque giravion spécifique (2), le procédé comprend les opérations suivantes :

-) collecte et transmission au calculateur d'exécution (3) par une instrumentation de bord (4) du giravion spécifique (2), d'informations de mesure (5) relatives à des paramètres de points de vol appliqués prédéfinis selon les paramètres relatifs aux points de vol simulés (17),

-) exécution par le calculateur d'exécution (3) des dites premières lois polynomiales (9) à partir des informations de mesure (5) préalablement collectées pour calculer les vitesses air estimées Vx, Vy (11) du giravion spécifique (2),

-) exécution des deuxièmes lois polynomiales (10) par le calculateur d'exécution (3) à partir des vitesses air estimées Vx et Vy (11) et calcul des vitesses air courantes $LAS_{Vx}$ et $LAS_{Vy}$ (13) du giravion spécifique (2),

-) affichage par des moyens d'affichage (7) d'informations relatives aux vitesses air courantes du giravion spécifique (2).

8. Procédé selon la revendication 7,

**caractérisée en ce qu'**en phase d'exploitation du calculateur d'exécution (3) embarqué sur un quelconque giravion spécifique (2), le procédé comprend les opérations suivantes :

-) détection par des moyens de détection (14) d'une situation de vol non stabilisé du giravion spécifique (2),

-) traitement par calcul des vitesses air courantes (13) préalablement à leur affichage, par des moyens de filtrage (12) générateurs d'une information à afficher (8,15) par les moyens d'affichage (7), ladite information à afficher (8,15) étant au moins relative à un signal d'alerte (15) indiquant ladite situation de vol non stabilisé préalablement détectée.

9. Procédé selon la revendication 8,

**caractérisé en ce que** l'opération de traitement par calcul des vitesses air courantes (13) comprend une opération de lissage à une fréquence temporelle donnée des vitesses air courantes (13) par des moyens de lissage (16), sous la dépendance desquels moyens de lissage (16) est placée la génération par les moyens de filtrage (12) d'informations à afficher par les moyens d'affichage (7) relatives à des vitesses air lissées (8) respectivement vitesse air lissée longitudinale $V_{ax}$ et vitesse air lissée latérale $V_{ay}$ du giravion spécifique (2).

## Patentansprüche

1. Verfahren zum Berechnen und anschließende Anzeigen von aktuellen wahren Fluggeschwindigkeiten (13) eines spezifischen Drehflügelflugzeugs, welches sich mit niedrigen Geschwindigkeiten bewegt, wobei die aktuellen wahren Fluggeschwindigkeiten (13) eine longitudinale aktuelle wahre Fluggeschwindigkeit $LAS_{Vx}$ und eine laterale aktuelle wahre Fluggeschwindigkeit $LAS_{Vy}$ sind, wobei das Verfahren umfasst:

-) einen Arbeitsgang der Ausarbeitung einer Regel (6) zur Berechnung der aktuellen wahren Fluggeschwindigkeiten (13), wobei der Arbeitsgang der Ausarbeitung einen Arbeitsgang von Versuchsflügen an Bord eines Drehflügelflugzeugs und einen Arbeitsgang der Integration der Berechnungsregel (6) in einen Rechner, der mit Messinstrumenten (4) verbunden ist, mit denen das spezifische Drehflügelflugzeug (2) ausgerüstet ist, umfasst,

-) einen Arbeitsgang der Ausführung der Berechnungsregel (6) an Bord des spezifischen Drehflügelflugzeugs (2), um die aktuellen wahren Fluggeschwindigkeiten (13) ausgehend von Messinformationen (5) zu bestimmen, die von den Messinstrumenten (4) des spezifischen Drehflügelflugzeugs (2) geliefert werden, und einen Arbeitsgang der Anzeige der aktuellen wahren Fluggeschwindigkeiten (13) durch die Anzeigemittel (7), mit denen das spezifische Drehflügelflugzeug (2) ausgerüstet ist,

**dadurch gekennzeichnet, dass**

a) der Arbeitsgang der Ausarbeitung der Rechenregel (6) folgende spezifische Arbeitsgänge umfasst:

-) Ausarbeitung eines Paares erster polynomischer Gesetze (9) zur Berechnung der geschätzten wahren Fluggeschwindigkeiten (11) bzw. einer geschätzten longitudinalen wahren Fluggeschwindigkeit $V_x$ und einer geschätzten lateralen wahren Fluggeschwindigkeit $V_y$ eines als Modell dargestellten Drehflügelflugzeugs einer Familie, zu der das spezifische Drehflügelflugzeug (2) gehört, mit einem Konstruktionsrechner (23), wobei die ersten polynomischen Gesetze (9) durch den Konstruktionsrechner (23) mit einer multilinearen Regression ausgehend von Parametern konstruiert werden, die sich auf simulierte Flugbahnpunkte (17) beziehen, die mit Hilfe eines Flugsimulators (18) definiert werden,

-) Ausarbeitung durch Versuchsflüge (25) mit dem Konstruktionsrechner (23), der mit einem Versuchsflugrechner (28) verbunden ist, der selbst wiederum mit den Messinstrumenten (31) verbunden ist, mit denen das Versuchsdrehflügelflugzeug (26), das aus dieser Familie stammt, ausgerüstet ist, eines Paares zweiter polynomischer Gesetze (10) zur Berechnung der wahren Fluggeschwindigkeiten des VersuchsDrehflügelflugzeugs, die bestimmt werden durch eine multilineare Regression mit Hilfe des Konstruktionsrechners (23) einerseits ausgehend von den geschätzten wahren Fluggeschwindigkeiten (11), der longitudinalen wahren Fluggeschwindigkeit $V_x$ bzw. der lateralen wahren Fluggeschwindigkeit $V_y$, die durch Anwendung von ersten polynomischen Gesetzen auf Parameter bezüglich Versuchsflugpunkten (25), die an Bord des Versuchsdrehflügelflugzeugs (26) ausgeführt werden, erhalten werden, und andererseits ausgehend von der longitudinalen wahren Fluggeschwindigkeit $LAS_{Vx}$ und der lateralen wahren Fluggeschwindigkeit $LAS_{Vy}$ des Versuchsdrehflügelflugzeugs (26), die durch Messinformationen (30) erhalten werden, die von den Messinstrumenten (31) geliefert werden, mit denen das Versuchsdrehflügelflugzeug (26) ausgerüstet ist,

b) der Integrationsarbeitsgang die Integration von ersten polynomischen Gesetzen (9) und von zweiten polynomischen Gesetzen (10) in einem Ausführungsrechner (3) umfasst, wobei der Arbeitsgang der Integration gefolgt wird von einem Arbeitsgang des Verbindens des Ausführungsrechners (3) mit den Messinstrumenten (4), mit denen das spezifische Drehflügelflugzeug (2) ausgerüstet ist,

c) während des Ausführungsarbeitsgangs die aktuellen wahren Fluggeschwindigkeiten (13) bestimmt werden ausgehend von Messinformationen (5), die von den Messinstrumenten (4) erzeugt werden, durch Ausführung von ersten polynomischen Gesetzen (9), die es erlauben, die geschätzten wahren Fluggeschwindigkeiten bzw. die geschätzte longitudinale wahre Fluggeschwindigkeit $V_x$ und die geschätzte laterale wahre Fluggeschwindigkeit $V_y$ zu berechnen, und anschließend durch Ausführung von zweiten polynomischen Gesetzen (10), die die geschätzten wahren Fluggeschwindigkeiten korrigieren,

d) während des abschließenden Arbeitsgangs der Anzeige die Anzeigemittel (7), die mit dem Ausführungsrechner (3) in Verbindung stehen, die aktuellen wahren Fluggeschwindigkeiten (13) bzw. die longitudinale wahre Fluggeschwindigkeit $LAS_{Vx}$ und die laterale wahre Fluggeschwindigkeit $LAS_{Vy}$ des spezifischen Drehflügelflugzeugs (2) anzeigen.

2.  Verfahren nach Anspruch 1,
    **dadurch gekennzeichnet, dass** die Parameter von simulierten Flugbahnpunkten (17) bestimmt werden mit einem Flugmodell (19), das das als Modell dargestellte Drehflügelflugzeug beschreibt, wobei das Flugmodell zuvor von einer Bedienungsperson erfasst wurde, wobei die Parameter bezüglich simulierter Flugbahnpunkte (17) in einer Datenbasis (22) aufgenommen sind und sich auf eine Mehrzahl simulierter Situationen (20) eines stabilisierten Flugs beziehen, die durch eine erste Vernetzung definiert sind.

3.  Verfahren nach einem der Ansprüche 1 und 2,
    **dadurch gekennzeichnet, dass** die ersten polynomischen Gesetze (9) von dem Konstruktionsrechner (23) ausgehend von der folgenden polynomischen Form konstruiert sind:

$$\begin{cases} V_x = \sum_i C_{\alpha_i}.\alpha_i \\ V_y = \sum_j C_{\beta_j}.\beta_j \end{cases}$$

wobei in den ersten polynomischen Gesetzen:

-) $V_x$ einer longitudinalen geschätzten wahren Fluggeschwindigkeit entspricht,
-) $V_y$ einer lateralen geschätzten wahren Fluggeschwindigkeit entspricht,
-) $\alpha_i$ und $\beta_j$ Monome sind, die in den folgenden jeweiligen Formeln ausgedrückt sind:

$$\alpha_i = \theta^{a_i}.\varphi^{b_i}.DTC^{c_i}.DTS^{d_i}.DT0^{e_i}.DTA^{f_i}.V_z^{g_i}.\sigma^{h_i}.N_r^{k_i}$$

$$\beta_j = \theta^{a_j}.\varphi^{b_j}.DTC^{c_j}.DTS^{d_j}.DT0^{e_j}.DTA^{f_j}.V_z^{g_j}.\sigma^{h_j}.N_r^{k_j}$$

wobei in den Monomen:

\*) $\theta$ der longitudinalen Lage des Drehflügelflugzeugs entspricht,

\*) $\varphi$ der lateralen Lage des Drehflügelflugzeugs entspricht,

\*) DTC dem longitudinalen zyklischen Anstellwinkel von Blättern eines Hauptrotors, mit denen das Drehflügelflugzeug ausgerüstet ist, entspricht,

\*) DTS dem lateralen zyklischen Anstellwinkel von Blättern des Hauptrotors entspricht,

\*) DTO dem kollektiven Anstellwinkel von Blättern des Hauptrotors entspricht,

\*) DTA dem kollektiven Anstellwinkel von Blättern eines Gegendrehmomentrotors, mit dem das Drehflügelflugzeug ausgerüstet ist, entspricht,

\*) $V_z$ der vertikalen Geschwindigkeit des Drehflügelflugzeugs entspricht,

\*) $\sigma$ der Dicht der Luft außerhalb des Drehflügelflugzeugs entspricht,

\*) $N_r$ der Betriebsart des Hauptrotors entspricht,

\*) $i$, $j$, $a_i$, $bi$, $c_i$, $d_i$, $e_i$, $f_i$, $g_i$, $h_i$ und $k_i$, $a_j$, $b_j$, $c_j$, $d_j$, $e_j$, $f_j$, $g_j$, $h_j$ und $k_j$ konstante Parameter sind, die von einer Bedienungsperson der Simulation für die Drehflügelflugzeuge der vorgegebenen Drehflügelflugzeugfamilie definiert werden,

-) $C_{\alpha_i}$ Koeffizienten sind, die jeweils auf die Monome $\alpha_i$ für die Drehflügelflugzeuge der vorgegebenen Familie von Drehflügelflugzeugen angewendet werden, wobei die Werte der Koeffizienten $C_{\alpha_i}$ durch multilineare Regression bezüglich eines ersten polynomischen Gesetzes zur Berechnung der geschätzten longitudinalen wahren Fluggeschwindigkeit $V_x$ berechnet werden,

-) $iC_{\beta_j}$ Koeffizienten sind, die jeweils auf Monome $\beta_j$ für die Drehflügelflugzeuge der gegebenen Familie von Drehflügelflugzeugen angewendet werden, wobei die Werte der Koeffizienten $C_{\beta_j}$ durch multilineare Regression bezüglich eines ersten polynomischen Gesetzes zur Berechnung der geschätzten lateralen Geschwindigkeit $V_y$ berechnet werden.

4. Verfahren nach einem der Ansprüche 2 und 3,
**dadurch gekennzeichnet, dass** die simulierten Situationen (20), betrachtet bei einem Flug des als Modell dargestellten Drehflügelflugzeugs bei niedrigen Geschwindigkeiten, durch die Bedienungsperson ausgewählt sind, die eine erste Vernetzung ausgehend von Werten der folgenden Parameter definiert:

\*) die Masse des Drehflügelflugzeugs, in mindestens jeder der zwei Extremsituationen betrachtet, wenn nicht auch in einer mittleren Situation,

\*) die Lage des Schwerpunkts des Drehflügelflugzeugs, selektiv intrinsisch und mit Lasten beladen bezüglich jeder der longitudinalen und lateralen Ausrichtung des Drehflügelflugzeugs, wobei die Lage des Schwerpunkts des mit Lasten beladenen Drehflügelflugzeugs in mindestens jeder der beiden Extremsituationen der Beladung, wenn nicht auch in mindestens einer mittleren Beladungssituation, betrachtet wird,

\*) die aus dem Luftdruck und der Lufttemperatur außerhalb des Drehflügelflugzeugs bestimmte Höhe, die mindestens in jeder der beiden Extremsituationen, wenn nicht auch in einer mittleren Situation, betrachtet wird,

\*) die senkrechte Geschwindigkeit des Drehflügelflugzeugs, die in mindestens jeder von einer Sinksituation und einer Steigsituation des Drehflügelflugzeugs, wenn nicht auch in mindestens einer Horizontalflugsituation des Drehflügelflugzeugs, betrachtet wird,

\*) die geschätzte longitudinale Geschwindigkeit des Drehflügelflugzeugs, die bei mindestens jeder der beiden jeweiligen Vorwärts- und Ritckwärts-Maximalgeschwindigkeiten betrachtet wird,

\*) die geschätzte seitliche Geschwindigkeit des Drehflügelflugzeugs, die mindestens in jeder der beiden Maximalgeschwindigkeiten, nach rechts bzw. nach links, betrachtet wird.

5. Verfahren nach einem der Ansprüche 1 bis 4,
**dadurch gekennzeichnet, dass** die Punkte des Versuchsflugs sich auf eine Mehrzahl von Versuchssituationen (27) eines stabilisierten Fluges des Versuchsdrehflügelflugzeugs (26), in dem der Konstruktionsrechner (23) untergebracht ist, beziehen, wobei die aktuellen wahren Fluggeschwindigkeiten (13), bzw. die aktuelle wahre longitudinale Fluggeschwindigkeit $LAS_{V_x}$ und die aktuelle wahre laterale Fluggeschwindigkeit $LAS_{V_y}$, von den Messinstrumenten (31) gemessen werden, mit denen das Versuchsdrehflügelflugzeug (26) ausgerüstet ist.

6. Verfahren nach einem der Ansprüche 1 bis 5,
**dadurch gekennzeichnet, dass** die zweiten polynomischen Gesetze (10) von dem Konstruktionsrechner (23) ausgearbeitet sind, indem sie sich in der folgenden polynomischen Form darstellen:

$$\begin{cases} LAS_{V_x} = \sum_m C_m . Vx^{\gamma_m} . Vy^{\delta_m} \\ LAS_{V_y} = \sum_n C_n . Vx^{\gamma_n} . Vy^{\delta_n} \end{cases}$$

wobei in den zweiten polynomischen Gesetzen (10) für ein Versuchsdrehflügelflugzeug, das aus der Familie stammt, in der das Rechensystem (1) in dem Drehflügelflugzeug installiert ist:

-) $LAS_{V_x}$ die aktuelle wahre longitudinale Geschwindigkeit des Versuchsdrehflügelflugzeugs (26) ist,
-) $LAS_{V_y}$ die aktuelle wahre laterale Fluggeschwindigkeit des Versuchsdrehflügelflugzeugs (26) ist,
-) $m$, $n$, $\gamma_m$, $\delta_m$, $\gamma_n$ und $\delta_n$ konstante Parameter sind, die von einer Bedienungsperson definiert sind,
-) $C_m$ Koeffizienten sind, die jeweils auf Monome $Vx^{\gamma_m}Vy^{\delta_m}$ angewendet werden, wobei die Werte der Koeffizienten durch multilineare Regression bezüglich eines zweiten polynomischen Gesetzes zur Berechnung der aktuellen wahren longitudinalen Fluggeschwindigkeit $LAS_{V_x}$ berechnet werden,
-) $C_n$ Koeffizienten sind, die jeweils auf Monome $Vx^{\gamma_n}Vy^{\delta_n}$ angewendet werden, wobei die Werte der Koeffizienten durch multilineare Regression bezüglich eines zweiten polynomischen Gesetzes zur Berechnung der aktuellen wahren lateralen Fluggeschwindigkeit $LAS_{V_y}$ berechnet werden.

7. Verfahren nach einem der Ansprüche 1 bis 6,
**dadurch gekennzeichnet, dass** in einer Benutzungsphase des Ausführungsrechners (3), der in einem beliebigen spezifischen Drehflügelflugzeug (2) installiert ist, das Verfahren folgende Arbeitsgänge aufweist:

-) Sammeln und Übertragen von Messinformationen (5) von Bordinstrumenten (4) des spezifischen Drehflügelflugzeugs (2) auf den Ausführungsrechner (3), wobei die Messinformationen (5) sich auf vordefinierte angewendete Parameter von Flugstreckenpunkten gemäß den Parametern bezüglich simulierter Flugstreckenpunkte (17) beziehen,
-) Ausführen der ersten polynomischen Gesetze (9) durch den Ausführungsrechner (3) ausgehend von Messinformationen (5), die vorher gesammelt wurden, um die geschätzten wahren Fluggeschwindigkeiten $V_x$, $V_y$ (11) des spezifischen Drehflügelflugzeugs (2) zu berechnen,
-) Ausführen der zweiten polynomischen Gesetze (10) durch den Ausführungsrechner (3) ausgehend von geschätzten wahren Fluggeschwindigkeiten $V_x$ und $V_y$ (11) und Berechnen von aktuellen wahren Geschwindigkeiten $LAS_{V_x}$ und $LAS_{V_y}$ (13) des spezifischen Drehflügelflugzeugs,
-) Anzeigen von Informationen bezüglich der aktuellen wahren Fluggeschwindigkeiten des spezifischen Drehflügelflugzeugs durch Anzeigemittel (7).

8. Verfahren nach Anspruch 7,
**dadurch gekennzeichnet, dass** in einer Phase des Betriebs des Ausführungsrechners (3), der in einem beliebigen spezifischen Drehflügelflugzeug (2) installiert ist, das Verfahren die folgenden Arbeitsgänge aufweist:

-) Erfassen einer nicht stabilen Flugsituation des spezifischen Drehflügelflugzeugs (2) durch Erfassungsmittel (14),
-) Behandeln durch Berechnen der aktuellen wahren Fluggeschwindigkeiten (13) vor ihrer Anzeige durch Filtermittel (12), die eine durch die Anzeigemittel (7) anzuzeigende Information (8, 15) erzeugen, wobei die anzuzeigende Information (8, 15) sich mindestens auf ein Alarmsignal (15) bezieht, das die nicht stabilisierte, vorher erfasste Flugsituation anzeigt.

9. Verfahren nach Anspruch 8,
**dadurch gekennzeichnet, dass** der Arbeitsgang der Behandlung durch Berechnung von aktuellen wahren Fluggeschwindigkeiten (13) einen Arbeitsgang des Glättens einer zeitweise gegebenen Frequenz von aktuellen wahren Fluggeschwindigkeiten (13) durch Glättungsmittel (16) umfasst, wobei die Erzeugung von durch die Anzeigemittel (7) anzuzeigenden Informationen durch die Filtermittel (12) unter die Abhängigkeit der Glättungsmittel (16) gestellt ist, wobei die Informationen sich auf geglättete wahre Fluggeschwindigkeiten (8) bzw. eine geglättete longitudinale wahre Fluggeschwindigkeit $V_{ax}$ und eine geglättete laterale wahre Fluggeschwindigkeit $V_{ay}$ des spezifischen Drehflügelflugzeugs (2) beziehen.

**Claims**

1. Method for calculating then displaying current airspeeds (13) of a specific rotorcraft (2) flying at low speeds, the current airspeeds (13) being respectively a longitudinal current airspeed $LAS_{V_x}$ and a lateral current airspeed $LAS_{V_y}$, comprising:

   -) an operation for development of a calculation rule (6) for said current airspeeds (13), said development operation comprising a test-flight operation on board a rotorcraft and an operation for integration of said calculation rule (6) into a calculator associated with measurement instruments (4) with which the specific rotorcraft (2) is equipped,
   -) an operation for execution, during flight on board the specific rotorcraft (2), of the calculation rule (6) for determining said current airspeeds (13) based on measurement information (5) provided by the measurement instruments (4) of the specific rotorcraft (2), and an operation for displaying said current airspeeds (13) by display means (7) with which the specific rotorcraft (2) is equipped,

   **characterised in that**:

   a) said operation for development of the calculation rule (6) comprises the following specific operations:

   -) development, by means of a construction calculator (23), of a pair of first polynomial laws (9) for the calculation of estimated airspeeds (11), respectively an estimated longitudinal airspeed $V_x$ and an estimated lateral airspeed $V_y$, of a modelled rotorcraft in a family to which the specific rotorcraft (2) belongs, the first polynomial laws (9) being constructed by multilinear regression by the construction calculator (23) based on parameters relating to simulated flight points (17) defined by means of a flight simulator (18),
   -) development, by test flights (25) by means of the construction calculator (23) in association with a test-flight calculator (38) itself associated with measurement instruments (31) with which a test rotorcraft (26) belonging to said family is equipped, of a pair of second polynomial laws (10) for the calculation of airspeeds of the test rotorcraft determined by multilinear regression by means of the construction calculator (23), on the one hand based on the estimated airspeeds (11), respectively longitudinal $V_x$ and lateral $V_y$, obtained by application of the first polynomial laws to parameters relating to points of test flights (25) performed on board the test rotorcraft (26), and on the other hand based on the longitudinal airspeed $LAS_{V_x}$ and the lateral airspeed $LAS_{V_y}$ of the test rotorcraft (26) obtained by means of the measurement information (30) provided by the measurement instruments (31) with which the test rotorcraft (26) is equipped,

   b) said integration operation comprises the integration into an execution calculator (3) of the first polynomial laws (9) and of the second polynomial laws (10), the integration operation being followed by an operation for associating the execution calculator (3) with the measurement instruments (4) with which the specific rotorcraft (2) is equipped,
   c) during said execution operation, the current airspeeds (13) are determined based on measurement information (5) generated by the measurement instruments (4), by execution of the first polynomial laws (9) enabling the calculation of the estimated airspeeds, respectively estimated longitudinal airspeed $V_x$ and estimated lateral airspeed $V_y$, then by execution of the second polynomial laws (10) correcting the estimated airspeeds,
   d) during said final display operation, the display means (7), in communication with said execution calculator (3), display said current airspeeds (13), respectively longitudinal airspeed $LAS_{V_x}$ and lateral airspeed $LAS_{V_y}$, of the specific rotorcraft (2).

2. Method according to claim 1,
   **characterised in that** the parameters of the simulated flight points (17) are determined by means of a flight model (19) describing the modelled rotorcraft, said flight model being previously entered by an operator, the parameters relating to the simulated flight points (17) being stored in a database (22), and relating to a plurality of simulated situations (20) of stabilised flight which are defined by a first grid.

3. Method according to any one of claims 1 and 2,
   **characterised in that** the first polynomial laws (9) are constructed by the construction calculator (23) based on the following polynomial form:

$$\begin{cases} V_x = \sum_i C_{\alpha_i} . \alpha_i \\ V_y = \sum_j C_{\beta_j} . \beta_j \end{cases}$$

in which first polynomial laws:

-) $V_x$ corresponds to an estimated longitudinal airspeed (11),
-) $V_y$ corresponds to an estimated lateral airspeed (11),
-) $\alpha_i$ and $\beta_j$ are monomials expressed in the following respective forms:

$$\alpha_i = \theta^{a_i} . \varphi^{b_i} . DTC^{c_i} . DTS^{d_i} . DT0^{e_i} . DTA^{f_i} . V_z^{g_i} . \sigma^{h_i} . N_r^{k_i}$$

$$\beta_j = \theta^{a_j} . \varphi^{b_j} . DTC^{c_j} . DTS^{d_j} . DT0^{e_j} . DTA^{f_j} . V_z^{g_j} . \sigma^{h_j} . N_r^{k_j}$$

in which monomials:

*) $\theta$ corresponds to the longitudinal attitude of the rotorcraft,
*) $\varphi$ corresponds to the lateral attitude of the rotorcraft,
*) **DTC** corresponds to the longitudinal cyclic pitch of the blades of a main rotor with which the rotorcraft is equipped,
*) **DTS** corresponds to the lateral cyclic pitch of the blades of said main rotor,
*) **DTO** corresponds to the collective pitch of the blades of said main rotor,
*) **DTA** corresponds to the collective pitch of the blades of an anti-torque rotor with which the rotorcraft is equipped,
*) $V_z$ corresponds to the vertical speed of the rotorcraft,
*) $\sigma$ corresponds to the density of the air outside the rotorcraft,
*) $N_r$ corresponds to the speed of said main rotor.
*) **i, j, $a_i$, $b_i$, $c_i$, $d_i$, $e_i$, $f_i$, $g_i$, $h_i$ and $k_i$, $a_j$, $b_j$, cj, $d_j$, $e_j$, $f_j$, $g_j$, $h_j$, and $k_j$** are constant parameters defined by an operator of said simulation for the rotorcraft of said given family of rotorcraft.

-) $C_{\alpha_i}$ are coefficients applied respectively to the monomials $\alpha_j$ for the rotorcraft of said given family of rotorcraft, the values of said coefficients $C_{\alpha i}$ being calculated by multilinear regression relating to a first polynomial law for the calculation of the estimated longitudinal airspeed $V_x$,
-) $C_{\beta_j}$ are coefficients applied respectively to the monomials $\beta_j$ for the rotorcraft of said given family of rotorcraft, the values of the coefficients $C_{\beta_j}$ being calculated by multilinear regression relating to a first polynomial law for the calculation of the estimated lateral airspeed $V_y$.

4. Method according to any one of claims 2 and 3,
**characterised in that** said simulated situations (20), considered in the case of the low-speed flight of a said modelled rotorcraft, are selected by the operator defining a first grid based on the values of the following parameters:

*) the mass of the rotorcraft, considered at least according to each of two extreme situations if not also according to at least one median situation,
*) the position of the centre of gravity of the rotorcraft, selectively intrinsically and carrying payloads, in terms of each of the longitudinal and lateral orientations of the rotorcraft, the position of the centre of gravity of the rotorcraft carrying payloads being considered at least according to each of two extreme load situations if not also according to at least one median load situation,

*) the altitude, determined according to the pressure and the temperature of the air outside a rotorcraft, considered at least according to each of two extreme situations if not also according to at least one median situation,
*) the vertical speed of the rotorcraft, considered at least according to each of a descent situation and an ascent situation of the rotorcraft, if not also according to at least one situation of maintaining the rotorcraft on the level,
*) the estimated longitudinal speed of the rotorcraft, considered at least according to each of two maximum, respectively forward and backward, speeds,
*) the estimated lateral speed of the rotorcraft, considered at least according to each of two maximum, respectively right and left, speeds.

5. Method according to any one of claims 1 to 4, **characterised in that** the points of the test flight relate to a plurality of test situations (27) of stabilised flight of the test rotorcraft (26) on board which the construction calculator (23) is located, the current airspeeds (13), respectively longitudinal $LAS_{Vx}$ and lateral $LAS_{Vy}$, being measured by the measurement instruments (31) with which the test rotorcraft (26) is equipped.

6. Method according to any one of claims 1 to 5,
**characterised in that** the second polynomial laws (10) are developed by the construction calculator (23) and presented in the following polynomial form:

$$\begin{cases} LAS_{Vx} = \sum_m C_m \cdot Vx^{\gamma_m} Vy^{\delta_m} \\ LAS_{Vy} = \sum_n C_n \cdot Vx^{\gamma_n} Vy^{\delta_n} \end{cases}$$

in which second polynomial laws (10), for a test rotorcraft belonging to said family on board which the calculation system (1) is located:

-) $LAS_{Vx}$ is the longitudinal current airspeed of the test rotorcraft (26),
-) $LAS_{Vy}$ is the lateral current airspeed of the test rotorcraft (26),
-) m, n, $\gamma_m$, $\delta_m$, $\gamma_n$, and $\delta_n$ are constant parameters defined by an operator,
-) $C_m$ are coefficients applied respectively to the monomials $Vx^{\gamma_m}Vy^{\delta_m}$, the values of the coefficients being calculated by multilinear regression relating to a second polynomial law for the calculation of the longitudinal current airspeed $LAS_{Vx}$,
-) $C_n$ are coefficients applied respectively to the monomials $Vx^{\gamma_n}Vy^{\delta_n}$, the values of the coefficients being calculated by multilinear regression relating to a second polynomial law for the calculation of the lateral current airspeed $LAS_{Vy}$.

7. Method according to any one of claims 1 to 6,
**characterised in that** in the operating phase of the execution calculator (3) located on board any one specific rotorcraft (2), the method comprises the following operations:

-) collection and transmission to the execution calculator (3), by onboard instrumentation (4) of the specific rotorcraft (2), of measurement data (5) relating to applied flight-point parameters predefined according to the parameters relating to the simulated flight points (17),
-) execution, by the execution calculator (3), of said first polynomial laws (9), based on previously collected measurement information (5), in order to calculate the estimated airspeeds Vx, Vy (11) of the specific rotorcraft (2),
-) execution of the second polynomial laws (10), by the execution calculator (3), based on the estimated airspeeds Vx and Vy (11), and calculation of the current airspeeds $LAS_{Vx}$ and $LAS_{Vy}$ (13) of the specific rotorcraft (2),
-) display, by display means (7), of information relating to the current airspeeds of the specific rotorcraft (2).

8. Method according to claim 7,
**characterised in that** in the operating phase of the execution calculator (3) located on board any one specific rotorcraft (2), the method comprises the following operations:

-) detection, by detection means (14), of an unstabilised flight situation of the specific rotorcraft (2),

-) calculation processing of the current airspeeds (13) prior to their display, by filter means (12) that generate information to be displayed (8, 15) by the display means (7), said information to be displayed (8, 15) relating to at least a warning signal (15) indicating said previously detected unstabilised flight situation.

9. Method according to claim 8,
**characterised in that** the operation of calculation processing of the current airspeeds (13) comprises an operation of smoothing, at a given time frequency, the current airspeeds (13) by smoothing means (16), which smoothing means (16) govern the generation by the filter means (12) of information to be displayed by the display means (7) relating to smoothed airspeeds (8), respectively longitudinal smoothed airspeed $V_{ax}$ and lateral smoothed airspeed $V_{ay}$, of the specific rotorcraft (2).

fig.1

fig.2

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2885222
- FR 2613078

- EP 0402224 A

**Littérature non-brevet citée dans la description**

- **YEW CHAI PAW et al.** Development and application of an integrated framework for small UAV flight control development. *MECHATRONICS,* Août 2011, vol. 21 (5), 789-802